# EUROPÄISCHE PATENTANMELDUNG

(11) **EP 1 914 665 A2**
(43) Veröffentlichungstag der Anmeldung: **23.04.2008**
(21) Anmeldenummer: 07118680.3
(22) Anmeldetag: 17.10.2007
(51) Int. Cl.: G06K 9/00, G06K 7/00

(54) **Verfahren und Vorrichtung zur Identifizierung von mit RFID-Transpondern gekennzeichneten Objekten**

(30) Priorität: 17.10.2006 DE 102006049454
(71) Anmelder: Krieger, Wolfgang, 28203 Bremen (DE)
(72) Erfinder: Krieger, Wolfgang, 28203 Bremen (DE)
(74) Vertreter: Wasiljeff, Johannes M.B.

(57) **Zusammenfassung**

Die Erfindung betrifft ein Verfahren zum Identifizieren von mit Transpondern 3 gekennzeichneten Objekten 12, 13, wobei mittels einer Leseeinrichtung 2 in den Transpondern 3 gespeicherte Transponderdaten ausgelesen werden, mittels einer Steuereinrichtung 8 die Leseeinrichtung 2 gesteuert wird und die von der Leseeinrichtung 2 ausgelesenen Transponderdaten erfasst werden. Die Leseeinrichtung 2 sendet mittels einer Sendeeinrichtung 4 elektromagnetische Wellen 5 aussendet, mittels der wenigstens ein sich im von diesen Wellen ausgebildeten Feld befindlicher Transponder 3 zum Senden von Transponderdaten aktiviert wird. Die Leseeinrichtung 2 empfängt mittels einer Empfangseinrichtung 6 vom Transponder 3 gesendete elektromagnetische Wellen 5 als Träger der zu transportierenden Transponderdaten. Zur Erhöhung der Erkennungssicherheit von Objekten werden mittels einer Kamera 10 Bilder einer vorbestimmten Bewegungsbahn 14 der Objekte 12, 13 oder eines vorbestimmbaren Raumsegments 18 erfasst und die erfassten Bilder einer Bildverarbeitung und Mustererkennung 9 zum Erkennen einer etwaigen Zugehörigkeit eines Objekts 12, 13 zu einer vorbestimmten Gruppe von Objekten unterzogen, wobei im Falle einer Erkennung eines Objekts 12, 13 als Objekt der vorbestimmten Objektgruppe die Leseeinrichtung 2 von der Steuereinrichtung 8 aktiviert wird, um die Transponderdaten auszulesen.

Die Erfindung betrifft ferner eine entsprechend ausgebildete RFID-Anlage 1.

## Beschreibung

Die Erfindung betrifft ein Verfahren zum Identifizieren von mit RFID-Transpondern gekennzeichneten Objekten. Mittels einer Leseeinrichtung werden in den Transpondern gespeicherte Transponderdaten ausgelesen. Die Leseeinrichtung wird mittels einer Steuereinrichtung gesteuert. Die von der Leseeinrichtung ausgelesenen Transponderndaten werden erfasst. Die Leseeinrichtung sendet mittels einer Sendeeinrichtung elektromagnetische Wellen aus, mittels derer wenigstens ein sich im von diesen Wellen ausgebildeten Feld befindlicher Transponder zum Senden von Transponderdaten aktiviert wird. Die Leseeinrichtung empfängt mittels einer Empfangseinrichtung vom Transponder gesendete elektromagnetische Wellen als Träger der zu transportierenden Transponderdaten.

Ferner betrifft die Erfindung eine RFID-Anlage zur Identifikation von mit Transpondern gekennzeichneten Objekten, wobei die RFID-Anlage eine Leseeinrichtung zum Auslesen von in den Transpondern gespeicherten Transponderdaten und eine Steuereinrichtung zum Steuern der Leseeinrichtung und Erfassen der von der Leseeinrichtung ausgelesenen Transponderdaten aufweist. Die Leseeinrichtung umfasst eine Sendeeinrichtung zum Senden elektromagnetischer Wellen, mittels der sich im von diesen Wellen ausgebildeten Feld befindliche Transponder zum Senden von Transponderdaten aktivierbar sind, und eine Empfangseinrichtung zum Empfangen elektromagnetischer Wellen, welche von Transpondern sendbar sind und die Transponderdaten transportieren.

Derartige RFID-Anlagen sind bspw. aus DE 20 2005 014 179 U1 bekannt. Diese bekannte Anlage wird zur Kontrolle des Warenflusses für Logistikzwecke eingesetzt. Dabei werden Warenpaletten über eine Schleuse umgeschlagen. Derartige Schleusen weisen ein Antennensystem auf, mittels dem RFID-Transponder ausgelesen, d.h. die in derartigen Transpondern gespeicherten Transponderdaten von der RFID-Anlage erfasst werden können.

Auf diese Weise ist es mit geringem personellen Aufwand möglich, Warenströme zu kontrollieren.

Unbefriedigend an derartigen Systemen ist jedoch, dass die Transponder mittels elektromagnetischer Wellen ausgelesen werden, welche sich über einen größeren Abstand und auch über einen größeren Raumwinkel ausbreiten. Sobald eine Vielzahl von mit Transpondern gekennzeichneten Objekten räumlich eng benachbart umgeschlagen wird, kann es zu erheblichen Problemen bei der Erfassung des gewünschten Objektes kommen. Es besteht eine erhebliche Gefahr, ein benachbartes Objekt anstelle des gewünschten zu erfassen. Dies ist jedoch nachteilig, da eine eindeutige Zuordnung von ausgesendeten Transponderdaten zum dazugehörigen Objekt wesentlich für die Kontrolle des Warenflusses ist.

DE 20 2005 014 179 U1 schlägt bauliche Maßnahmen vor, um eine eindeutige Zuordnung eines Transponders zum Abtastbereich einer RFID-Anlage zu verbessern. Hierzu wird eine Abschirmung an der dem Abtastbereich abgewandten Rückseite des Antennensystems vorgeschlagen.

Diese Lösung führt jedoch oftmals noch nicht zu zufriedenstellenden Ergebnissen.

Es wurde daher vorgeschlagen, die jeweilige RFID-Anlage mit Lichtschranken oder Bewegungsmeldern zu aktivieren. D.h. eine entsprechende RFID-Anlage wird nicht mehr ununterbrochen betrieben, sondern durch Lichtschranken bzw. Bewegungsmelder vorübergehend eingeschaltet und nach einer vorbestimmten Zeitdauer wieder ausgeschaltet. Durch diese Maßnahme lassen sich die Zeitfenster verkleinern, innerhalb der Transponderdaten erwartet werden.

Nachteilig an einer derartigen Aktivierung von RFID-Anlagen mittels Lichtschranken oder Bewegungsmeldern ist jedoch, dass beliebige Objekte die Aktivierung vornehmen können und nicht nur mit Transpondern versehene Objekte. Bspw. kann eine durch eine RFID-Anlage durchlaufende Person eine Lichtschranke oder einen Bewegungsmelder auslösen und die RFID-Anlage aktivieren, die im dadurch ausgelösten Zeitfenster andere Objekte mit Transpondern zur Abgabe von Transponderdaten veranlassen kann. Dies führt jedoch zu fehlerhaften Erkennungen von Objekten.

Der Erfindung liegt daher die Aufgabe zugrunde, die Sicherheit bei der Erkennung von mit RFID-Transpondern versehenen Objekten zu erhöhen.

Die Erfindung löst diese Aufgabe mit einem eingangs genannten Verfahren, bei dem mittels einer Kamera Bilder von einer vorbestimmten Bewegungsbahn der Objekte oder eines vorbestimmbaren Raumsegments erfasst werden und die erfassten Bilder einer Bildverarbeitung und Mustererkennung zum Erkennen einer etwaigen Zugehörigkeit eines Objekts zu einer vorbestimmten Gruppe von Objekten unterzogen werden. Im Falle einer Zuordnung eines Objekts zu einer vorbestimmten Objektgruppe wird die Leseeinrichtung von der Steuereinrichtung aktiviert, um die Transponderdaten auszulesen.

Die Erfindung löst diese Aufgabe ferner durch eine RFID-Anlage der eingangs genannten Art, die ferner eine Kamera zum Erfassen von Bildern einer vorbestimmten Bewegungsbahn der Objekte oder eines vorbestimmbaren Raumsegments und eine mit der Kamera und der Steuereinrichtung in Verbindung stehende Bildverarbeitungs- und Mustererkennungs-Einrichtung aufweist, mittels derer eine etwaige Zugehörigkeit eines Objekts zu einer vorbestimmten Gruppe von Objekten erkennbar ist, wobei die Steuereinrichtung derart ausgebildet ist, dass im Falle einer Erkennung eines Objekts als Objekt der vorbestimmten Objektgruppe die Leseeinrichtung von der Steuereinrichtung aktivierbar ist, um die Transponderdaten dieses Objektes auszulesen.

Dank der erfindungsgemäßen Lösung wird die Leseeinrichtung nur dann aktiviert, wenn tatsächlich ein Objekt vorliegt bzw. vorhanden ist, bei dem ein Transponder erwartet wird. Hierzu wird ein Bereich vor der bzw. um die RFID-Leseeinrichtung von einer Kamera beobachtet und die von der Kamera erfassten Bilder einer Bildverarbeitung und Mustererkennung unterzogen. Die sich innerhalb des Erfassungsbereichs der Kammer befindenden Objekte werden auf eine etwaige Zugehörigkeit zu einer vorbestimmten Gruppe von Objekten untersucht. Bspw. wird festgestellt, ob es sich bei einem Objekt um eine Palette (mit Waren) auf einem Flurförderfahrzeug oder um ein unbeladenes Flurförderfahrzeug oder um eine Person handelt. Zu diesem Zweck wird die Gruppe der mit Transpondern versehenen Objekten, welche die Leseeinrichtung passieren sollen, vordefiniert. Jedes in den Erfassungsbereich der Kamera eintretende erkannte Objekt dieser Gruppe aktiviert die Leseeinrichtung. Die Leseeinrichtung sendet sodann elektromagnetische Wellen aus, welche einen etwaig an dem Objekt vorhandenen Transponder veranlassen, seine Transponderdaten auszusenden. Diese ggf. ausgesendeten Transponderdaten werden von einer Empfangseinrichtung der Leseeinrichtung empfangen und in der Steuereinrichtung weiter verarbeitet.

Auf diese Weise kann die Erfindung zuverlässig Warenströme kontrollieren.

Bei einer vorteilhaften Ausführungsform wird bei Erkennung mehrerer Objekte als Objekte der vorbestimmten Objektgruppe die Steuereinrichtung der Leseeinrichtung eine Vorgabe für die Anzahl der erwarteten Objekte mitteilen, so dass die Leseeinrichtung bereit ist, eine dieser Vorgabe entsprechende Anzahl von Transponderdaten auszulesen. Erkennt also die Bildverarbeitungs- und Mustererkennungseinheit mehrere Objekte der vorbestimmten Objektgruppe, bspw. dass sich im Empfangsbereich der RFID-Anlage zwei mit Transpondern versehene Paletten z.B. auf einem Flurförderfahrzeug befinden, wird die Leseeinrichtung derart konfiguriert, dass sie bereit ist, Transponderdaten von zwei bzw. einer der erkannten Anzahl von Objekten der vorbestimmten Objektgruppe entsprechenden Anzahl von Transpondern auszulesen. In entsprechender Weise kann die Bildverarbeitung- und Mustererkennungseinheit dieses Verfahren auf weitere Objekte ausdehnen. Eine Grenze bildet die Auflösungs- und Identifizierungsfähigkeit der Bildverarbeitung.

Da nicht auszuschließen ist, dass ein Transponder beschädigt, fehlerhaft oder abgeschirmt ist oder gänzlich fehlt, wird die Leseeinrichtung nach einer vorbestimmten Anzahl von Leseversuchen abbrechen oder es wird bei Abweichung zwischen der Anzahl erwarteter Objekte und der Anzahl erkannter Objekte ein Signal bzw. eine Fehlermeldung erzeugt. Diese Fehlermeldung kann u.a. eine Bedienperson alarmieren, welche ggf. manuell den entsprechenden Warenumschlag verbucht.

Bei einer weiteren vorteilhaften Ausführungsform wird eine Fehlermeldung erzeugt, wenn die von der Bildverarbeitungs- und Mustererkennungseinheit erkannte Anzahl von Objekten nicht mit der von der Leseeinrichtung erfassten Anzahl von Transponderdaten korrespondiert. Wiederum alarmiert eine derartige Fehlermeldung vorteilhafterweise eine Bedienperson, welche eine entsprechende Buchung des Warenumschlages manuell nachvollzieht.

Bei einer weiteren vorteilhaften Ausführungsform wird in Anhängigkeit vom Vorliegen bzw. Nicht-Vorliegen einer derartigen Fehlermeldung ein Objekt einem von mehreren unterschiedlichen Transportwegen zugeführt. Insbesondere wird bei Vorliegen einer Fehlermeldung ein Objekt einem Transportweg für nicht oder für fehlerhaft gekennzeichnete Objekte zugeführt. Auf diese Weise können nicht oder fehlerhaft gekennzeichnete Objekte ausgesondert werden, um ggf. anschließend von einer Bedienperson individuell erfasst zu werden.

Bei einer weiteren vorteilhaften Ausführungsform wird mittels der Bildverarbeitungs- und Mustererkennungseinheit die Position eines Objekts verfolgt. Wenn das Objekt eine vorbestimmte Position erreicht, wird die Leseeinrichtung aktiviert. Hierbei wird vorteilhafterweise auch die Bewegungsrichtung von Objekten berücksichtigt. Mittels der Bildverarbeitung und Mustererkennung kann prognostiziert werden, wann sich ein Objekt im optimalen Bereich zum Auslesen der Transponderdaten befindet. Die Leseeinrichtung kann somit zu einem optimalen Zeitpunkt aktiviert werden. Darüber hinaus hat die Verfolgung eines Objektes entlang seiner Bewegungsbahn den Vorteil, dass das Objekt aus mehreren verschiedenen Blickwinkeln untersucht werden kann. Hierdurch kann die Erkennungssicherheit weiter erhöht werden.

Vorteilhafterweise wird die Sendeeinrichtung und/oder Empfangseinrichtung in Abhängigkeit von den mittels der Bildverarbeitungs- und Mustererkennungseinheit erkannten Objekten und/oder deren Position parametrisiert. Bei dieser Parametrisierung kann bspw. die Sendeleistung der Sendeeinrichtung justiert werden. Zusätzlich oder alternativ kann auch der Raumwinkel einer Sende- und/oder Empfangsantenne justiert werden. Die Leseeinrichtung wird somit in Bezug auf ihre einstellbaren Parameter in Abhängigkeit der von der Bildverarbeitungs- und Mustererkennungseinheit gelieferten Ergebnisse optimiert.

Weitere vorteilhafte Ausführungsformen ergeben sich aus den Unteransprüchen sowie aus den anhand der Zeichnung näher erläuterten Ausführungsbeispiele. In der Zeichnung zeigt:
- Fig. 1: ein schematisches Diagramm zur Veranschaulichung einer erfindungsgemäßen RFID-Anlage und zur Erläuterung eines erfindungsgemäßen Verfahrens und
- Fig. 2: ein Ausführungsbeispiel einer RFID-Anlage in einer Seitenansicht.

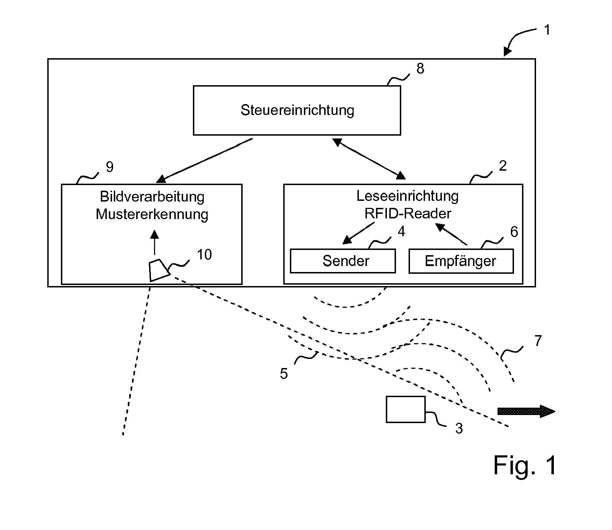

Fig. 1 zeigt vereinfacht ein Ausführungsbeispiel einer RFID-Anlage 1. Die RFID-Anlage 1 weist eine Leseeinrichtung 2, sog. RFID-Reader, zum Auslesen von in, insbesondere aktiven oder passiven, RFID-Transpondern 3 gespeicherten Transponderdaten auf. Die Leseeinrichtung 2 umfasst einen Sender 4 zum Senden elektromagnetischer Wellen 5, mittels der der Transponder 3 zum Senden von Transponderdaten aktivierbar ist. Die Leseeinrichtung 2 weist ferner einen Empfänger 6 auf zum Empfangen elektromagnetischer Wellen 7, welche vom Transponder 3 gesendet werden.

Die Leseeinrichtung 2 wird von einer Steuereinrichtung 8 gesteuert. Insbesondere wird die Leseeinrichtung 2 von der Steuereinrichtung 8 aktiviert bzw. ein- und ausgeschaltet. Die Steuereinrichtung 8 kann hierzu ein Auslösesignal an die Leseeinrichtung 2 senden. Mittels dieses Auslösesignals wird die Leseeinrichtung 2 veranlasst elektromagnetische Wellen 5 zum Aktivieren des Transponders 3 auszusenden und ggf. vom Transponder 3 zurückgesendete Daten formelektromagnetischer Wellen 7 zu empfangen.

Entweder schaltet sich die Leseeinrichtung 2 nach einer vorbestimmten Zeitdauer selbsttätig wieder aus. Alternativ sendet die Steuereinrichtung 8 ein Ausschaltsignal an die Leseeinrichtung 2, damit diese deaktiviert wird. Die Zeitdauer, während der die Leseeinrichtung 2 eingeschaltet ist, ist vorteilhafterweise abhängig von der Anzahl der erwarteten Transponderdaten und somit von der Anzahl der auszulesenden Transponder.

Bspw. erfolgt die Aktivierung der Leseeinrichtung 2 derart, dass der Empfänger 6 für eine vorbestimmte Zeitdauer, d.h. ein Zeitfenster, für den Empfang von Transponderdaten bereit ist. D.h. nur bei aktivierter Leseeinrichtung 2 ist der Empfänger 6 für den Empfang von Transponderdaten freigeschaltet, während bei deaktivierter Leseeinrichtung 2 der Empfänger für den Empfang von Transponderdaten gesperrt ist.

Zusätzlich oder alternativ erfolgt das Aktivieren und Deaktivieren der Leseeinrichtung 2 - statt durch einfaches Ein- bzw. Ausschalten der Leseeinrichtung 2 - durch Verstellung von Parametern der Leseeinrichtung 2, insbesondere von Parametern des Senders 4 und/oder des Empfängers 6.

Bspw. wird zur Aktivierung der Leseeinrichtung 2 der Sender 4 auf eine vorbestimmte Sendeleistung hochgefahren und bei Deaktivierung der Leseeinrichtung 2 die Sendeleistung auf eine signifikant niedrigere Sendeleistung reduziert. Bei reduzierter Sendeleistung ist jedoch der Sender 4 nicht abgeschaltet, sondern sendet weiterhin dauerhaft oder getaktet Signale. Das Herunterfahren des Senders 4 auf reduzierte Sendeleistung hat den Vorteil, dass die Aufweckzeit des Senders 4 signifikant reduziert werden kann, d.h. die Zeitdauer zur Wiederherstellung des vollen Sendebetriebs sehr kurz ist. Demgegenüber ist die Wiedereinschaltzeit eines vollständig abgeschalteten Senders wesentlich größer.

Zusätzlich oder alternativ zur Verstellung der Sendeleistung können auch weitere Parameter des Senders 4 und/oder des Empfängers 6 verstellt werden. Bspw. können die Sendefrequenz und/oder die Empfangsfrequenz verstellt werden, um die Leseeinrichtung 2 zu aktivieren bzw. zu deaktivieren. Bspw. können die Sende- und/oder Empfangsfrequenz während aktivierter Leseeinrichtung 2 auf einen vorbestimmten gemeinsamen Wert eingestellt und bei deaktivierter Leseeinrichtung 2 auf unterschiedliche Werte von Sendefrequenz und Empfangsfrequenz eingestellt werden.

Zusätzlich oder alternativ kann auch die Ausprägung des elektromagnetischen Feldes des Senders 4, insbesondere die Richtcharakteristik einer dem Sender 4 zugeordneten Senderantenne elektrisch, elektronisch und/oder mechanisch verändert werden. Zusätzlich oder alternativ kann auch die Richtcharakteristik der entsprechenden Empfangsantenne des Empfängers 6 elektrisch, elektronisch und/oder mechanisch verändert werden. Bspw. kann während deaktivierter Leseeinrichtung die Richtcharakteristik der Sendeantenne derart eingestellt werden, dass keinerlei determinierte Signale, insbesondere weder Signale der RFID-Anlage 1 noch Signale benachbarter RFID-Anlagen empfangen werden können. In entsprechender Weise kann bei deaktivierter Leseeinrichtung 2 die Richtcharakteristik der Empfangsantenne derart ausgebildet werden, dass sie in eine Zone weist, aus der keine elektromagnetischen Wellen zu erwarten sind.

Durch Verstellung derartiger Parameter der Leseeinrichtung 2 zur Aktivierung bzw. Deaktivierung der Leseeinrichtung 2 kann eine im Wesentlichen verzögerungsfreie Aktivierung der Leseeinrichtung 2 erfolgen.

Ferner ist die RFID-Anlage 1 derart ausgebildet, um Betriebsparameter von benachbarten RFID-Anlagen zu erkennen, wie bspw. die Sendefrequenz einer benachbarten RFID-Anlage. Die RFID-Anlage 1 verändert dann ihre eigenen Betriebsparameter, bspw. ebenfalls ihre eigene Sendefrequenz, in einer Weise, um diese von der Sendefrequenz der benachbarten RFID-Anlage zu unterscheiden. Auf diese Weise werden zunächst gleichartig konfigurierte RFID-Anlagen automatisch derart modifiziert, dass etwaige Interferenzen zwischen benachbarten RFID-Anlagen reduziert werden.

Die RFID-Anlage 1 umfasst ferner eine Bildverarbeitungs- und Mustererkennungseinheit 9, welche eine Kamera 10 aufweist. Bei einem alternativen Ausführungsbeispiel sind zwei oder mehr Kameras vorgesehen, um weitere Blickwinkel erfassen zu können.

Die von der Kamera 10 erfassten Bilder werden zyklisch verarbeitet und dabei einer Mustererkennung unterzogen. Mittels dieser Mustererkennung soll erkannt werden, ob im Erfassungsbereich der Kamera 10 ein oder mehrere Objekte einer vordefinierten Gruppe von Objekten vorhanden sind. Hierzu verfügt die Bildverarbeitungs- und Mustererkennungseinheit 9 über einen vordefinierten Datensatz zur Charakterisierung einer Gruppe von Objekten. Bei dieser Gruppe von Objekten handelt es sich bspw. um Palettentypen und/oder um Verpackungsbehältnisse. Es können zusätzlich oder alternativ auch direkt unverpackte Objekte definiert werden. Diese vordefinierte Gruppe von Objekten charakterisiert solche Objekte, die beim durchzuführenden Warenumschlag erwartet werden.

Die Bildverarbeitungs- und Mustererkennungseinheit 9 meldet der Steuereinrichtung 8, sobald sie die Zugehörigkeit eines oder mehrerer Objekte zu der vorbestimmten Gruppe von Objekten erkannt hat. Die Steuereinrichtung 8 aktiviert daraufhin die Leseeinrichtung 2, damit diese den Transponder des entsprechenden Objekts auslesen kann. Die Anzahl von erkannten Objekten beeinflusst den Lesevorgang der Leseeinrichtung 2 derart, dass die Leseeinrichtung für eine Zeitdauer eingeschaltet wird, in der eine der erwarteten Anzahl von Objekten entsprechende Datenmenge aus den den Objekten zugeordneten Transpondern ausgelesen werden kann. Da jedoch unter Umständen ein Transponder beschädigt sein kann, ist die Zeitdauer auch bei einer größeren Anzahl erkannter Objekte begrenzt. D.h. auch wenn nicht die erwartete Datenmenge ausgelesen werden kann, wird nach Ablauf dieser Zeitdauer die Leseeinrichtung deaktiviert.

Die Bildverarbeitungs- und Mustererkennungseinheit 9 ist entweder als selbstständige Baugruppe oder aber als Software innerhalb der RFID-Anlage 1 realisiert. In gleicher Weise ist die Steuereinrichtung 8 entweder als selbstständige Baugruppe oder als Software innerhalb der RFID-Anlage 1 realisiert.

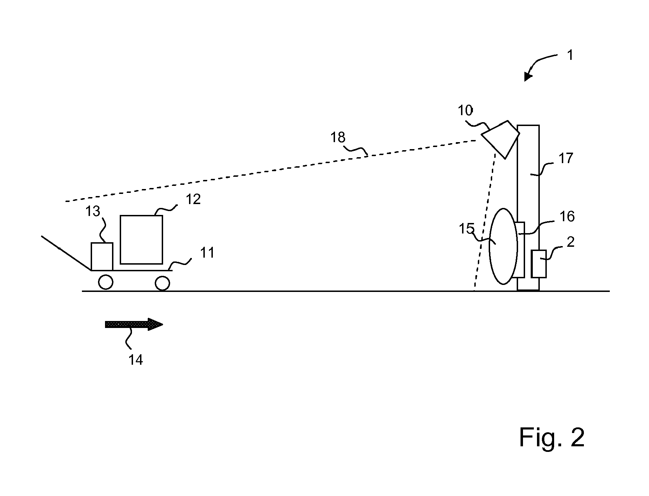

Fig. 2 zeigt ein konkreteres Ausführungsbeispiel der Erfindung. Ein Flurfahrzeug 11 mit zwei Objekten 12, 13, bpsw. zwei Paletten, bewegt sich entlang eines Transportweges bzw. einer Bewegungsbahn 14 in Richtung der RFID-Anlage 1, welche eine bspw. als Webcam ausgestaltete Kamera 10 aufweist. Ein schaltbares elektromagnetisches Hochfrequenzfeld 15 ist im Bereich der Leseeinrichtung 2 vorgesehen, das von Antennen 16 erzeugt und erfasst wird.

Die RFID-Anlage 1 ist als Tor 17 ausgebildet, durch welches die Objekte 12, 13 entlang ihres Transportweges 14 gefördert werden. Die Kamera 10 erfasst einen Bereich 18, innerhalb dessen sie Objekte erfassen kann. Dieser Erfassungsbereich 18 kann je nach Bedarf über ein an der Kamera 10 vorgesehenes ZoomObjektiv oder über Softwareeinstellungen variiert, d.h. vergrößert oder verkleinert werden. Innerhalb dieses Erfassungsbereiches 18 können sich Flurförderfahrzeuge 11 bzw. Objekte 12, 13 frei bewegen und trotzdem ihre etwaige Zugehörigkeit zur vorbestimmten Objektgruppe erkannt werden, wodurch das erfindungsgemäße System sehr flexible ist.

Mittels der eingesetzten Bildverarbeitung und Mustererkennung ist eine sichere Unterscheidung von leeren Fahrzeugen, Personen und anderen Objekten von den vordefinierten Objekten möglich. Insgesamt wird somit die Erkennungssicherheit einer RFID-Anlage signifikant erhöht.

Darüber hinaus kann dank der Bildverarbeitung und Mustererkennung bereits vor Eintritt eines Flurförderfahrzeuges in das Tor 17 vorausgesagt werden, wie viele Objekte zu erwarten sind. Hierdurch kann die Zuverlässigkeit der Ergebnisse der Leseeinrichtung erhöht bzw. eine Verifizierung der Ergebnisse der Leseeinrichtung und der Bildverarbeitung und Mustererkennung durchgeführt werden. Sofern die Bildverarbeitung und Mustererkennung einerseits und die Leseeinrichtung andererseits eine unterschiedliche Anzahl von Objekten meldet, wird vorteilhafterweise eine Fehlermeldung erzeugt, welche entweder eine Bedienperson veranlasst, den entsprechenden Warenumschlag zu kontrollieren oder aber die während eines an die Erzeugung der Fehlermeldung gekoppelten Zeitfensters durch das Tor 17 geförderten Objekte auzusondern.

Dank der erfindungsgemäßen Kombination der RFID-Leseeinrichtung und der Bildverarbeitung und Mustererkennung kann ein Warenumschlag bzw. Wareneingang oder Warenausgang selbst bei einer Störung der Leseeinrichtung überwacht werden. Die beiden unterschiedlichen Systeme der Bildverarbeitung und Mustererkennung einerseits und der auf elektromagnetischen Wellen basierenden Leseeinrichtung andererseits können sich darüber hinaus welchselseitig kontrollieren und ihre Ergebnisse aus Plausibilität von der Steuereinrichtung überprüfen lassen.

Auch in prozessuraler Hinsicht ergänzen sich die RFID-Leseeinrichtung sowie die Bildverarbeitung und Mustererkennung auf vorteilhafte Weise: Die RFID-Leseeinrichtung besitzt eine scharfe Rampenfunktion hinsichtlich ihrer Erkennungsleistung, d.h. sie erkennt entweder ein RFID-Objekt als zu einer vorbestimmten Gruppe von Objekten zugehörig oder nicht. Demgegenüber kann die Bildverarbeitung und Mustererkennung auch Objekte erkennen, deren Zugehörigkeit mittels der RFID-Leseeinrichtung nicht sicher gelingt. Die Bildverarbeitung und Mustererkennung besitzt eine unscharfe Erkennungsfunktion und ist durch Nutzung von Fuzzy-Logik lernfähig. Die RFID-Leseeinrichtung liest zwar vorzugsweise Transponderdaten aus einem definierten Raumbereich; in Einzelfällen sind jedoch auch einzelne und stochastisch verteilte Lesevorgänge bzw. Identifizierungen in signifikant größeren Entfernungen als erwartet möglich. Demgegenüber kann die Bildverarbeitung und Mustererkennung durch ihre Fokussierung und variable Tiefenschärfe zuverlässig über die Entfernung eines erkannten Objektes urteilen. Die Verschränkung der Technologie einer RFID-Leseeinrichtung mit einer Einrichtung zur Bildverarbeitung und Mustererkennung verbessert somit nicht nur die Prozesssicherheit des Gesamtsystems, sondern lässt auch neue Gesamtfunktionen zu, so dass die Verschränkung eine ideale Kombination bedeutet.

Bspw. gestattet eine frühe Erkennung eines Objektes mittels Bildverarbeitung und Mustererkennung ein weiches Hochfahren, d.h. eine allmähliche Aktivierung der RFID-Leseeinrichtung, welche bspw. bis vor einer derartigen Erkennung bei gerichtsmöglicher Leistung als ruhende RFID-Leseeinrichtung betrieben wurde. Ein schlagartiges Ein- und Ausschalten der RFID-Leseeinrichtung kann somit vermieden werden.

Darüber hinaus bietet die Bildverarbeitung und Mustererkennung den Vorteil der Überwachung des Systems. Wird ein Objekt zuverlässig als zu einer Gruppe von Objekten zugehörig erkannt, wobei jedoch die Identifizierung durch die RFID-Leseeinrichtung ausbleibt, wird das von der Bildverarbeitung und Mustererkennung 10 erhaltene Bild zu Dokumentationszwecken gespeichert.

Schließlich stellt das System, bestehend aus den Teilsystemen der RFID-Leseeinrichtung und der Bildverarbeitung und Mustererkennung die Funktion bereit, dass ein Teilsystem das andere Teilsystem überwacht, um Fehlfunktionen des Systems, insbesondere des jeweils anderen Teilsystems zu erkennen. Wird bspw. ein Objekt mit dem Teilsystem der Bildverarbeitung und Mustererkennung als der vorbestimmten Gruppe von Objekten zugehörend erkannt und bleibt jedoch die daraufhin erwartete Erkennung des Objektes mittels des Teilsystems der RFID-Leseeinrichtung aus, diagnostiziert das System einen Fehler in einem der beiden Teilsysteme und/oder in einem diesem Objekt zugeordneten Transponder. Der Fehler wird dann mittels Signalisierungsmittel einer Bedienpeson optisch und/oder akustisch signalisiert.

Insgesamt kann die Erfindung die Prozesssicherheit im Hinblick auf die Erkennung von RFID-Objekten bei einem Warenumschlag signifikant verbessern.

## Patentansprüche

1. Verfahren zum Identifizieren von mit Transpondern (3) **gekennzeichneten** Objekten (12, 13), wobei mittels einer Leseeinrichtung (2) in den Transpondern (3) gespeicherte Transponderdaten ausgelesen werden, mittels einer Steuereinrichtung (8) die Leseeinrichtung (2) gesteuert wird und die von der Leseeinrichtung (2) ausgelesenen Transponderdaten erfasst werden, wobei die Leseeinrichtung (2) mittels einer Sendeeinrichtung (4) elektromagnetische Wellen (5) aussendet, mittels der wenigstens ein sich im von diesen Wellen ausgebildeten Feld befindlicher Transponder (3) zum Senden von Transponderdaten aktiviert wird, und die Leseeinrichtung (2) mittels einer Empfangseinrichtung (6) von dem Transponder (3) gesendete elektromagnetische Wellen (5) als Träger der zu transportierenden Transponderdaten empfängt,
**dadurch gekennzeichnet, dass**
mittels einer Kamera (10) Bilder einer vorbestimmten Bewegungsbahn (14) der Objekte (12, 13) oder eines vorbestimmbaren Raumsegments (18) erfasst werden und die erfassten Bilder einer Bildverarbeitung und Mustererkennung (9) zum Erkennen einer etwaigen Zugehörigkeit eines Objekts (12, 13) zu einer vorbestimmten Gruppe von Objekten unterzogen werden, wobei im Falle einer Erkennung eines Objekts als Objekt der vorbestimmten Objektgruppe die Leseeinrichtung (2) von der Steuereinrichtung (8) aktiviert wird, um die Transponderdaten auszulesen.

2. Verfahren nach Anspruch 1,
**dadurch gekennzeichnet, dass**
im Falle einer Erkennung mehrerer Objekte (12, 13) als Objekte der vorbestimmten Objektgruppe die Steuereinrichtung (8) der Leseeinrichtung (2) eine Vorgabe für die Anzahl der erwarteten Objekte (12, 13) mitteilt, so dass die Leseeinrichtung (2) bereit ist, eine dieser Vorgabe entsprechende Anzahl von Transponderdaten auszulesen.

3. Verfahren nach Anspruch 1 oder 2,
**dadurch gekennzeichnet, dass**
eine Fehlermeldung erzeugt wird, wenn die von der Bildverarbeitung und Mustererkennung (9) erkannte Anzahl von Objekten (12, 13) nicht mit der von der Leseeinrichtung (2) erfassten Anzahl von Transponderdaten korrespondiert.

4. Verfahren nach Anspruch 3,
**dadurch gekennzeichnet, dass**
in Abhängigkeit von einem Vorliegen oder Nicht-Vorliegen einer Fehlermeldung die Objekte (12, 13) unterschiedlichen Transportwegen (14) zugeführt werden, insbesondere bei Vorliegen einer Fehlermeldung ein Objekt (12, 13) einem Transportweg für nicht oder für fehlerhaft **gekennzeichnete** Objekte zugeführt wird.

5. Verfahren nach einem der vorhergehenden Ansprüche,
**dadurch gekennzeichnet, dass**
mittels der Bildverarbeitung und Mustererkennung (9) die Position eines Objektes (12, 13) verfolgt wird und bei Erreichen einer vorbestimmten Position die Leseeinrichtung (2) aktiviert wird.

6. Verfahren nach einem der vorhergehenden Ansprüche,
**dadurch gekennzeichnet, dass**
die Sendeeinrichtung (4) und/oder die Empfangseinrichtung (6) in Abhängigkeit von den mittels der Bildverarbeitung und Mustererkennung (9) erkannten Objekten (12, 13) und/oder deren Position parametrisiert wird.

7. Verfahren nach Anspruch 6,
**dadurch gekennzeichnet, dass**
die Parametrisierung ein Justieren der Sendeleistung der Sendeeinrichtung (4) umfasst.

8. Verfahren nach einem der Ansprüche 6 oder 7,
**dadurch gekennzeichnet, dass**
die Parametrisierung ein Justieren des Raumwinkels der Sende- und/oder Empfangsantenne (16) umfasst.

9. RFID-Anlage zur Identifikation von mit Transpondern (3) **gekennzeichneten** Objekten (12, 13), wobei die RFID-Anlage (1) eine Leseeinrichtung (2) zum Auslesen von in den Transpondern (3) **gekennzeichneten** Transponderdaten und eine Steuereinrichtung (8) zum Steuern der Leseeinrichtung (2) und Erfassen der von der Leseeinrichtung (2) ausgelesenen Transponderdaten aufweist, wobei die Leseeinrichtung (2) eine Sendeeinrichtung (4) zum Senden elektromagnetischer Wellen, mittels der sich im von diesen Wellen ausgebildeten Feld befindliche Transponder (3) zum Senden von Transponderdaten aktivierbar sind, und eine Empfangseinrichtung (6) zum Empfangen elektromagnetischer Wellen umfasst, welche von Transpondern (3) sendbar sind und die Transponderdaten transportieren,
**gekennzeichnet durch**
eine Kamera (10) zum Erfassen von Bildern einer vorbestimmten Bewegungsbahn (14) der Objekte (12, 13) oder eines vorbestimmbaren Raumsegments (18) und eine mit der Kamera (10) und der Steuereinrichtung (8) in Verbindung stehende Bildverarbeitungs- und Mustererkennungseinrichtung (9) aufweist, mittels der eine etwaige Zugehörigkeit eines Objekts (12, 13) zu einer vorbestimmten Gruppe von Objekten erkennbar ist, wobei die Steuereinrichtung (8) derart ausgebildet ist, dass im Falle einer Erkennung eines Objekts (12, 13) als Objekt der vorbestimmten Objektgruppe die Leseeinrichtung (2) von der Steuereinrichtung (8) aktivierbar ist, um die Transponderdaten dieses Objekts auszulesen.

10. RFID-Anlage nach Anspruch 9,
**gekennzeichnet durch**
Mittel zur Durchführung wenigstens eines der Verfahrensschritte nach einem der Ansprüche 1 bis 8.
